# EUROPÄISCHE PATENTSCHRIFT

(11) **EP 0 704 500 B1**
(45) Veröffentlichungstag und Bekanntmachung des Hinweises auf die Patenterteilung: **08.12.1999**
(21) Anmeldenummer: 95114637.2
(22) Anmeldetag: 18.09.1995
(51) Int. Cl.: C09C 1/24, C01G 49/06

(54) **Hochtransparente, gelbe Eisenoxidpigmente, Verfahren zu ihrer Herstellung sowie deren Verwendung**
Highly transparent, yellow iron oxide pigments, process for their preparation and their use
Pigments d'oxyde de fer jaunes, très transparents, procédé pour leur préparation et leur utilisation

(30) Priorität: 30.09.1994 DE 4434972
(43) Veröffentlichungstag der Anmeldung: 03.04.1996
(73) Patentinhaber: BAYER AG, 51368 Leverkusen (DE)
(72) Erfinder: Pitzer, Ulrike, Dr., D-47800 Krefeld (DE)

(56) Entgegenhaltungen:
- US-A- 4 291 010
- DATABASE WPI Derwent Publications Ltd., London, GB; AN 79-02923b & JP-A-53 136 038 (MORISHITA BENGARA)

## Beschreibung

Die vorliegende Erfindung betrifft hochtransparente, gelbe Eisenoxidpigmente der α-FeOOH-Modifikation mit einer spezifischen Oberfläche von mehr als 100 m²/g mit hoher Temperaturstabilität, Verfahren zu ihrer Herstellung sowie deren Verwendung.

Eisenoxidpigmente mit einer mittleren Teilchengröße von kleiner 0,1 µm werden als transparente Eisenoxidpigmente bezeichnet, da sie sichtbares Licht nicht streuen und daher lichtdurchlässig sind. Alternativ zur Teilchengröße wird auch häufig die spezifische Oberfläche als Maß für die Größe der Partikel verwendet. Insbesondere bei nadelförmigen Teilchen bietet sich dieses Maß an, um die Angabe von Teilchengrößen in verschiedenen Raumrichtungen zu vermeiden. Dabei sind Pulver mit spezifischen Oberflächen nach BET von mehr als 80 m²/g in der Regel als transparent zu bezeichnen. Hochtransparent sind Pigmente mit spezifischen Oberflächen nach BET von mehr als 100 m²/g.

Bei deckenden Pigmenten sind verschiedene Beschichtungen, Verfahren zur Aufbringung dieser Beschichtungen und deren Einfluß auf die Eigenschaften der Pigmente bekannt. So sind in der DE-A 3 632 913 Eisennoxidfarbpigmente beschrieben, die eine Beschichtung aus farblosen Verbindungen der Elemente Mg, Zn, Al, La, Y, Zr, Sn und/oder Ca aufweisen. Die dort beschriebenen Beschichtungen verschieben den isoelektrischen Punkt der Pigmente auf pH-Werte von größer als 7 und verbessern dadurch die Verarbeitungseigenschaften und die koloristischen Eigenschaften. Die DE-A 3 632 913 betrifft ausschließlich opake, nicht transparente Pigmente. Bei sauber gewaschenen transparenten Eisenoxidpigfällung menten liegt der isoelektrische Punkt auch ohne weitere chemische Nachbehandlung in der Regel zwischen pH 7 und pH 9, so daß durch eine Beschichtung keine Verbesserung des Verarbeitungsverhaltens zu erwarten ist.

In der EP-A 0 221 473 werden Eisenoxidgelbpigmente beschrieben, die mit Aluminiumverbindungen der Zusammensetzung (AlO)ₓPO₄(OH)ₓ₋₃ mit 10>x>3 beschichtet sind. Beschichtungen dieser Art verbessern die Hitzebeständigkeit der Eisenoxidpigmente. Auch hierbei geht es ausschließlich um deckende Pigmente. Zur Verbesserung der Temperaturstabilität sind dabei hohe Konzentrationen an Beschichtungssubstanz notwendig, die zwischen 7,5 und 25 Gew.-% liegen.

Andererseits sind gerade hochtransparente, gelbe Eisenoxidpigmente infolge ihrer hohen Feinteiligkeit sehr wenig temperaturbeständig. Opake Eisenoxidpigmente sind bei ca. 210 °C hitzebeständig. Aus den anwendungstechnischen Mitteilungen für kommerziell erhältliche hochtransparente Eisenoxidpigmente, z.B. der Technischen Information "Pigments for metal-effect finishes" B/S 0519 defs, Ausgabe Mai 1988, der Fa. BASF, geht hervor, daß hochtransparente Eisenoxidgelbpigmente nur bis maximal 160 °C thermisch beständig sind. Damit ist ein Einsatz zur Einfärbung der meisten Kunststoffe ausgeschlossen, da diese bei Temperaturen von über 200 °C verarbeitet werden. Auch für Anwendungen in neueren, wäßrigen Lacksystemen, die Filmbildungstemperaturen von ca. 180 °C benötigen sowie für Pulverlacke oder Coil-Coating-Applikationen ist ein Einsatz gelber, hochtransparenter Eisenoxidpigmente nicht möglich.

Es bestand somit ein Bedarf an thermisch beständigeren hochtransparenten Eisenoxidgelbpigmenten. Zur Verbesserung der Hitzebeständigkeit deckender Eisenoxidpigmente müssen die Pigmente laut EP-A 2 214 73 mit 7,5 bis 25 Gew.-% einer Aluminiumverbindung beschichtet werden. Wegen der hohen Feinteiligkeit ist für hochtransparente Pigmente ein noch höherer Anteil an Beschichtungsmenge zu erwarten. Geometrische Uberlegungen zeigen, daß die oben genannten Beschichtungsmengen beispielsweise bei den in der EP-A 2 214 73 beschriebenen Eisenoxidgelbpigmenten des Typs Bayferrox 920 (Handelsprodukt der Fa. Bayer AG) mit nadelförmigen Teilchen einer Länge von ca. = 0,6 µm und einer Breite von ca. 0,1 µm zu Schichtdicken von 3 bis 15 nm führen. Für dieselben Schichtdicken würde man bei hochtransparenten Pigmenten mit einer in alle Richtungen um den Faktor 10 kleineren Teilchengröße umgerechnet Beschichtungsmengen von 25 - 60 Gew.-% benötigen. Durch so hohe Gehalte an Beschichtungssubstanz werden jedoch die Teilchen vergröbert, so daß mit einer Verschlechterung der Transparenz zu rechnen ist. Außerdem wird dadurch eine deutliche Verschlechterung der koloristischen Daten erwartet, da die farbgebende Komponente Eisenoxid nur noch in relativ geringen Mengen vorliegt.

Aus US-A 3 918 985 sind röntgenamorphe, temperaturstabile, lasierende, gelbe Eisenoxidpigmente der Formel C_{0,01-0,05}Fe₂O_{2,960-2,999} und Verfahren zu deren Herstellung bekannt. Diese Pigmente haben jedoch die Nachteile, daß sie zum einen ein außerordentlich geringes Schüttgewicht haben und dadurch bei der Verarbeitung eine hohe Staubungsneigung aufweisen und zum zweiten noch Eisen-II-Ionen enthalten, die zusammen mit der amorphen Struktur zu einer geringen Oxidationsstabilität der Pigmente führen können. Außerdem ist das beschriebene Gasphasenverfahren zur Herstellung der Pigmente technisch aufwendig und schwierig. Aufgabe war es daher, Eisenoxidpigmente der α-FeOOH-Modifikation mit verbesserter Temperaturbeständigkeit bei gleichzeitig hoher Transparenz und gutem Färbevermögen auf technischen einfachem Wege herzustellen.

Aus dem Dokument JP-A-53/136028 ist schon ein Verfahren bekannt, bei dem Eisenoxidpigmente der α-FeOOH-Modifikation in Wasser dispergiert und einer Beschichtungsbehandlung mit Al- Verbindungen unterzogen werden, um die Hitzebeständigkeit zu verbessern. Dieses Suspension wird aber zuerst einer Hydrothermalerbehandlung unterworfen.

Es wurde nun gefunden, daß Eisenoxidpigmente die diese Forderungen erfüllen, mit Hilfe eines einfachen Verfahrens Lagestellt werden können. Gegenstand der Erfindung ist somit ein Verfahren gemäß der Definition des Anspruchs 1. Hierbei handelt es sich um hochtransparente, gelbe Eisenoxidpigmente der α-FeOOH-Modifikation mit einer spezifischen BET-Oberfläche von mehr als 100 m²/g, die bei einer Temperatur von 180 °C gegenüber einer Zersetzung des α-FeOOH beständig sind.

Überraschenderweise wurde gefunden, daß hochtransparente Eisenoxidpigmente der α-FeOOH-Modifikation mit verbesserter Temperaturstabilität sich unter diesen Bedingungen herstellen lassen, auch wenn die Eisenoxidpigmente mit der temperaturbeständigen, farblosen, anorganischen Al-Verbingung in relativ geringer Menge beschichtet werden. Besonders überraschend ist dabei, daß eine verbesserte Temperaturstabilität schon bei einer so geringen Menge an Beschichtungssubstanz gefunden wird, die bei weitem noch nicht ausreicht, die gesamte Pigmentteilchenoberfläche vollständig zu umhüllen, sondern bei der nur ein Teil der Pigmentoberfläche bedeckt ist. Zur. Verbesserung der Temperaturbeständigkeit haben sich die erfindungsgemäßen Beschichtungen mit Aluminiumoxiden, -hydroxiden, -oxidhydroxiden bewährt. Wie erwartet, nimmt durch die Beschichtung die Feinteiligkeit der Pigmente, gekennzeichnet durch die spezifische Oberfläche der Pigmente, ab. Überraschenderweise hat dies jedoch keinen bedeutenden Einfluß auf die Transparenz der Pigmente. Um eine Temperaturstabilisierung bis 180 °C zu erreichen, sind Beschichtungen mit ca. 2,0 Gew.-% Al bezogen auf das Gesamtpigment (entspricht umgerechnet ca. 3,7 Gew.-% Al₂O₃) ausreichend. Mit ca. 8 Gew.-% Al (entspricht ca. 15 Gew.-% Al₂O₃-Beschichtung) kann die Temperaturstabilität bis auf 220 °C gesteigert werden. Noch höhere Schichtdicken bringen keine weitere erhebliche Verbesserung in der Temperaturstabilität, sondern nur eine Verschlechterung in der Transparenz und insbesondere in der Koloristik.

Überraschenderweise liegen die auf die Pigmentoberfläche bezogenen Beschichtungsmengen damit viel niedriger als bei den in der EP-A 221 473 beschriebenen opaken Eisenoxidpigmenten. Die für opake Pigmente beschriebenen Beschichtungen mit Aluminiumphosphaten führen zwar auch zu einer Verbesserung der Hitzebeständigkeit. Diese fällt jedoch bei gleichem Aluminiumgehalt etwas geringer aus als eine Beschichtung mit Aluminiumoxid, -hydroxid oder -oxidhydroxid.

Die Herstellung der Pigmente erfolgt so, daß man von einem hochtransparenten, gelben Eisenoxidpigment der α-FeOOH-Modifikation, bevorzugt in Form einer wäßrigen Paste, ausgeht und dieses in Wasser suspendiert. Je nach Herstellverfahren des Ausgangspigmentes kann auch direkt die Herstellsuspension eingesetzt werden. Zu dieser Suspension wird eine lösliche Al-Verbindung gegeben. Bevorzugt handelt es sich dabei um Al₂(SO₄)₃-Lösung oder NaAl(OH)₄-Lösung. Durch Zufügen von einem Fällungsmittel, z.B. Natronlauge, Soda, Schwefelsäure usw., wird dann auf die gut dispergierten Eisenoxidteilchen eine farblose, schwerlösliche anorganische Verbindung ausgefällt. Dabei handelt es sich um Aluminiumoxid oder -hydroxid oder -oxidhydroxid.

Die Menge an Beschichtungssubstanz muß an das zu beschichtende Pigment und die gewünschte Hitzebeständigkeit angepaßt werden. Die notwendigen Mengen liegen zwischen 2 und 8 % Al bezogen auf das Gesamtpigment Nach der Auffällung wird das beschichtete Pigment abfiltriert, salzfrei gewaschen, getrocknet und gegebenenfalls gemahlen. Die so hergestellten Pigmente zeichnen sich durch eine verbesserte Temperaturbeständigkeit aus.

Die temperaturbeständigen, hochtransparenten, gelben Eisenoxidpigmente lassen sich besonders vorteilhaft in Lacksystemen mit hohen Einbrenn- oder Filmbildungstemperaturen sowie in Kunststoffen mit Verarbeitungstemperaturen von über 170 °C einsetzen. Diese Verwendung ist daher ebenfalls Gegenstand dieser Erfindung.

Die Messung der spezifischen Oberfläche nach BET erfolgt gemäß DIN 66131 nach der Stickstoff-1-Punkt-Adsorptionsmethode.

Die farbmetrischen Daten werden bestimmt, indem das zu untersuchende Pigment mit einem Gehalt von 5 Gew.-% bezogen auf Lacktrockenrückstand in einem Lack auf Alkydal-F48-Basis (mittelöliges Alkydalharz auf Basis trocknender pflanzlicher Fettsäuren - Handelsprodukt der Bayer AG) vollständig dispergiert wird. Für die Dispergierung ist in der Regel eine vierstündige Mahlung auf einer Planetenmühle ausreichend. Der Lack wird in 100 µm-Küvetten gefüllt. Für die Bestimmung der koloristischen Daten wird der Lack über einem weißen Glasstandard mit einem Farbmeßgerät der Geometrie d/8 gemessen. Nach DIN 6174, Lichtart C, 2 ° Normalbeobachter wird der CIELAB-Farbabstand Δ E∗_{ab} gegenüber einem Bezug berechnet. Für die Bestimmung der Transparenz wird derselbe Lack über einem schwarzen Glasstandard gemessen. Als Maß für die Transparenz wird der gemessene Farbabstand Δ E∗_{ab} im Vergleich zu einer Messung von unpigmentiertem Klarlack über demselben schwarzen Untergrund verwendet. Im Idealfall ist dieser Farbabstand Null. Als hochtransparent sind Pigmente bis zu einem Farbabstand über Schwarz zwischen unpigmentiertem und pigmentiertem Lack von weniger als ca. 8 CIELAB-Einheiten zu bezeichnen.

Die Bestimmung der Hitzebeständigkeit erfolgt in Anlehnung an die DIN 53772 (Bestimmung der Hitzebeständigkeit durch Spritzgießen), indem 5 g des zu untersuchenden Pigmentes auf einer Aluminiumschale 30 min in einem Trockenschrank erhitzt werden. Die Prüftemperatur wird solange in Abständen von 10 °C erhöht, bis das Pigment im Vergleich zum nicht getemperten Pigment eine deutliche Farbänderung in Richtung Rot aufweist. Die Pigmente werden farbmetrisch nach der oben beschriebenen Methode charakterisiert. Die Prüftemperatur, bis zu der der Farbabstand Δ E*_{ab} zwischen der getemperten und ungetemperten Probe kleiner als 3 CIELAB-Einheiten beträgt, gibt die Grenze der Temperaturbeständigkeit an.

Im folgenden wird die Erfindung beispielhaft beschrieben, ohne daß hierin eine Einschränkung zu sehen ist.

### Beispiele

### Beispiel 1

Aus FeSO₄-Lösung wurde durch Fällung mit Natronlauge und anschließende Oxidation mit Luft ein hochtransparentes, gelbes Eisenoxidpigment der α-FeOOH-Modifikation hergestellt. Das Pigment wurde abfiltriert und sauber gewaschen. Der Feststoffanteil der so hergestellten Pigmentpaste liegt bei 29,7 % FeOOH. Ein Teil der Pigmentpaste wurde bei 90 °C getrocknet. Die spezifische Oberfläche des getrockneten Pigmentes beträgt 163 m²/g.

168 g Pigmentpaste wurden in 1 882 ml Wasser resuspendiert. Zu dieser Suspension wurden 32,9 g Al₂(SO₄)₃-Lösung mit einem umgerechneten Al₂O₃-Gehalt von 7,6 Gew.-% zugefügt und 10 min gerührt. Unter weiterem Rühren wurde solange langsam Natronlauge zudosiert, bis der pH-Wert auf pH 6 angestiegen war. Die Suspension wurde danach weitere 30 min gerührt, dann filtriert, gewaschen und getrocknet. Die spezifische Oberfläche nach BET beträgt 146 m²/g. Der Al-Gehalt des Pigmentes liegt bei 2,2 Gew.-%. Die farbmetrische Charakterisierung des beschichteten Pigmentes über einem schwarzen Untergrund ergibt im Vergleich zu unpigmentiertem Klarlack einen Farbabstand Δ E*_{ab} von 3,6 CIELAB-Einheiten; das heißt, das Pigment ist hochtransparent.

Jeweils 5 g des Pigmentes wurden 30 min bei 160 °C und 180°C in einem Trockenschrank getempert. Anschließend wurden das thermisch unbehandelte und die getemperten Pigmente durch vierstündige Planetenmahlung in einem Alkydallack F48 dispergiert und dann farbmetrisch über weißem Untergrund charakterisiert. Die erhaltenen Farbabstände zwischen den getemperten Proben und dem ungetemperten Bezug sind in Tabelle 1 aufgeführt. Das Pigment ist danach bis mindestens 180 °C hitzebeständig. Zum Vergleich enthält die Tabelle auch die Abtestergebnisse über die thermische Beständigkeit der Handelsprodukte Sicotrans L1915 und L1916 (Produkte der Fa. BASF), Cappoxyt 4214X (Produkt der Fa. Cappelle) und Transoxide yellow 10-30-AC-0553 (Produkt der Fa. Hilton Davis).

### Beispiel 2

168 g der unter Beispiel 1 beschriebenen Paste eines hochtransparenten Eisenoxidpigmentes der α-FeOOH-Modifikation wurden in 1 882 ml Wasser resuspendiert. Zu dieser Suspension wurden 23,4 g NaAl(OH)₄-Lösung mit einem umgerechneten Al₂O₃-Gehalt von 21,4 Gew.-% zugefügt und 10 min gerührt. Unter weiterem Rühren wurde langsam Schwefelsäure zudosiert, bis der pH-Wert auf pH 6 gefallen war. Die Suspension wurde danach weitere 30 min gerührt, dann filtriert, gewaschen und getrocknet. Die spezifische Oberfläche nach BET beträgt 133 m²/g. Der Al-Gehalt liegt bei 4,0 %. Die farbmetrische Charakterisierung des beschichteten Pigmentes über einem schwarzen Untergrund ergibt im Vergleich zu unpigmentiertem Klarlack einen Farbabstand Δ E*_{ab} von 4,3 CIELAB-Einheiten; das heißt, das Pigment ist hochtransparent.

Jeweils 5 g des Pigmentes wurden 30 min bei 180 °C, 190 °C und 200 °C in einem Trockenschrank getempert. Anschließend wurden das thermisch unbehandelte und die getemperten Pigmente durch vierstündige Planetenmahlung in einem Alkydallack F48 dispergiert und dann farbmetrisch charakterisiert. Die erhaltenen Farbabstände zwischen den getemperten Proben und dem ungetemperten Bezug sind in Tabelle 1 aufgeführt. Das Al-beschichtete Pigment ist bei 190 °C hitzebeständig.

### Beispiel 3

168 g der unter Beispiel 1 beschriebenen Paste eines hochtransparenten Eisenoxidpigmentes der α-FeOOH-Modifikation wurden in 1 882 ml Wasser resuspendiert. Zu dieser Suspension wurden 46,7 g NaAl(OH)₄-Lösung mit einem umgerechneten Al₂O₃-Gehalt von 21,4 Gew.-% zugefügt und 10 min gerührt. Unter weiterem Rühren wurde langsam Schwefelsäure zudosiert, bis der pH-Wert auf pH 6 gefallen ist. Die Suspension wurde danach weitere 30 min gerührt, dann filtriert, gewaschen und getrocknet. Die spezifische Oberfläche nach BET beträgt 111 m²/g. Der Al-Gehalt liegt bei 7,4%. Die farbmetrische Charakterisierung des beschichteten Pigmentes über einem schwarzen Untergrund ergibt im Vergleich zu unpigmentiertem Klarlack einen Farbabstand Δ E*_{ab} von 5,3 CIELAB-Einheiten; das heißt, das Pigment ist hochtransparent.

Jeweils 5 g des Pigmentes wurden 30 min bei 180 °C, 200 °C und 210 °C in einem Trockenschrank getempert. Anschließend wurden das thermisch unbehandelte und die getemperten Pigmente durch vierstündige Planetenmahlung in einem Alkydallack F48 dispergiert und dann farbmetrisch charakterisiert. Die erhaltenen Farbabstände zwischen den getemperten Proben und dem ungetemperten Bezug sind in Tabelle 1 aufgeführt. Das Al-beschichtete Pigment ist bis 200 °C hitzebeständig.

### Beispiel 4

Ein hochtransparentes, gelbes Eisenoxidpigment wurde hergestellt, indem Natronlauge im Überschuß vorgelegt, FeSO₄-Lösung zudosiert und das ausgefällte Eisen(II)-hydroxid mit Luft zu FeOOH oxidiert wird. Das Pigment wurde abfiltriert und gewaschen. Der Feststoffanteil der Paste lag bei 23,6 Gew.-% FeOOH. Ein Teil der Pigmentpaste wurde getrocknet. Die spezifische Oberfläche nach BET beträgt 128 m²/g.

211,9 g der gewaschenen Filterpaste wurden in 1 838 ml Wasser resuspendiert. Zu der Suspension wurden 35 g NaAl(OH)₄-Lösung mit einem umgerechneten Al₂O₃-Gehalt von 21,4 Gew.-% zugefügt und 10 min gerührt. Unter weiterem Rühren wurde langsam Schwefelsäure zudosiert, bis der pH-Wert auf pH 5,7 gefallen war. Die Suspension wurde danach weitere 30 min gerührt, dann filtriert, gewaschen und getrocknet. Die spezifische Oberfläche nach BET beträgt 114 m²/g. Der Al-Gehalt liegt bei 6,6 %. Die farbmetrische Charakterisierung des beschichteten Pigmentes über einem schwarzen Untergrund ergibt im Vergleich zu unpigmentiertem Klarlack einen Farbabstand Δ E*_{ab} von 4,4 CIELAB-Einheiten; das heißt, das Pigment ist hochtransparent.

Jeweils 5 g des Pigmentes wurden 30 min bei 200 °C und 220°C in einem Trockenschrank getempert. Anschließend wurden die thermisch unbehandelten und die getemperten Pigmente durch vierstündige Planetenmahlung in einem Alkydallack F48 dispergiert und dann farbmetrisch charakterisiert. Die erhaltenen Farbabstände zwischen den getemperten Proben und dem ungetemperten Bezug sind in Tabelle 1 aufgeführt. Das Al-beschichtete Pigment ist bis mindestens 220 °C hitzebeständig.

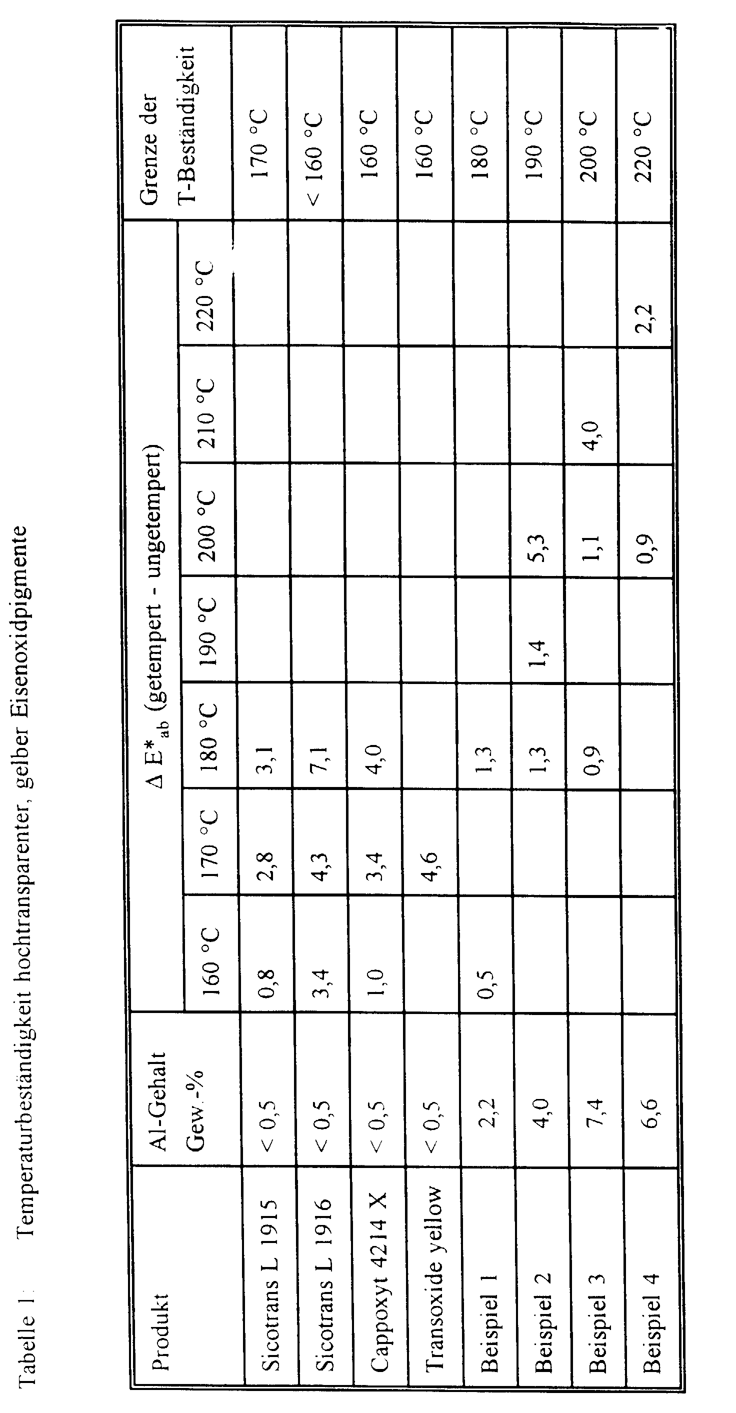

## Patentansprüche

1. Verfahren zur Herstellung hochtransparenter, gelber Eisenoxidpigmente der α-FeOOH-Modifikation mit einer spezifischen Oberfläche nach BET von mehr als 100 m2/g, die bei einer Temperatur von 180°C gegenüber einer Zersetzung in α-Fe₂O₃ hitzebeständig sind und die eine Beschichtung aufweisen, die aus einer farblosen, anorganischen Aluminiumverbindung aus der Gruppe Aluminiumoxid, Aluminiumhydroxid und Aluminiumoxidhydroxid besteht, wobei der Aluminiumgehalt des beschichteten Pigments zwischen 2,0 Gew.-% und 8 Gew.-% beträgt, dadurch gekennzeichnet, daß hochtransparente, gelbe Eisenoxidpigmente der α-FeOOH-Modifikation unter Bildung einer wäßrigen Suspension gefällt werden gegebenenfalls als wäßrige Paste gewonnen und in Wasser resuspendiert werden und direkt zu der wäßrigen Suspension der hochtransparenten, gelben Eisenoxidpigmente eine lösliche Aluminiumverbindung und Fällungsmittel zugegeben werden und die farblose, schwerlösliche, anorganische Aluminiumverbindung auf die Eisenoxidteilchen aufgefällt wird.

2. Verfahren zur Herstellung hochtransparenter, gelber Eisenoxidpigmente gemäß Anspruch 1, dadurch gekennzeichnet, daß die wäßrige Suspension der gefällten Eisenoxidpigmente filtriert wird und die Eisenoxidpigmente gewaschen und in Wasser redispergiert werden vor dem Auffällen der Aluminiumverbindung.

3. Verfahren zur Herstellung hochtransparenter, gelber Eisenoxidpigmente gemäß Anspruch 1, dadurch gekennzeichnet, daß als lösliche Aluminiumverbindung Aluminiumsulfat und/oder Natriumaluminat eingesetzt wird.

4. Verfahren zur Herstellung hochtransparenter, gelber Eisenoxidpigmente der α-FeOOH-Modifikation gemäß Anspruch 1, dadurch gekennzeichnet, daß als Fällungsmittel Natronlauge, Schwefelsäure, Natriumaluminat und/oder Aluminiumsulfat eingesetzt wird.

## Claims

1. A method of producing highly transparent, yellow iron oxide pigments of the α-FeOOH modification, which have a BET specific surface greater than 100 m²/g, are resistant to heat at a temperature of 180°C in relation to decomposition into α-Fe₂O₃ and comprise a coating which consists of a colourless, inorganic aluminium compound from the group comprising aluminium oxide, aluminium hydroxide and aluminium oxide hydroxide, wherein the aluminium content of the coated pigment is between 2.0 wt.% and 8 wt.%, characterised in that highly transparent, yellow iron oxide pigments of the α-FeOOH modification are precipitated, forming an aqueous suspension, optionally recovered as an aqueous paste and resuspended in water and a soluble aluminium compound and precipitating agent are added directly to the aqueous suspension of highly transparent, yellow iron oxide pigments and the colourless, sparingly soluble, inorganic aluminium compound is precipitated onto the iron oxide particles.

2. A method of producing highly transparent, yellow iron oxide pigments according to claim 1, characterised in that the aqueous suspension of precipitated iron oxide pigments is filtered and the iron oxide pigments are washed and redispersed in water prior to precipitation thereon of the aluminium compound.

3. A method of producing highly transparent, yellow iron oxide pigments according to claim 1, characterised in that aluminium sulfate and/or sodium aluminate are/is used as the soluble aluminium compound.

4. A method of producing highly transparent, yellow iron oxide pigments of the α-FeOOH modification according to claim 1, characterised in that sodium hydroxide solution, sulfuric acid, sodium aluminate and/or aluminium sulfate are/is used as the precipitating agent.

## Revendications

1. Procédé pour la préparation de pigments jaunes, hautement transparents d'oxyde de fer de la modification α-FeOOH avec une surface spécifique BET supérieure à 100 m²/g, lesquels sont résistants à la chaleur à une température de 180°C par rapport à une décomposition en α-Fe₂O₃ et présentent un revêtement qui est constitué d'un composé inorganique sans couleur d'aluminium choisi parmi l'oxyde d'aluminium, l'hydroxyde d'aluminium et l'oxyde et hydroxyde d'aluminium, la teneur en aluminium du pigment revêtu étant comprise entre 2,0 % en poids et 8% en poids, caractérisé en ce que l'on fait précipiter des pigments jaunes, hautement transparents d'oxyde de fer de la modification α-FeOOH avec formation d'une suspension aqueuse, on les récupère éventuellement comme pâte aqueuse et on les remet en suspension dans de l'eau, et on ajoute directement aux suspensions aqueuses des pigments jaunes, hautement transparents d'oxyde de fer un composé soluble d'aluminium et un agent de précipitation et on fait précipiter le composé inorganique d'aluminium, difficilement soluble, sans couleur sur les particules d'oxyde de fer.

2. Procédé pour la préparation de pigments jaunes, hautement transparents d'oxyde de fer selon la revendication 1, caractérisé en ce que l'on filtre la suspension aqueuse des pigments précipités d'oxyde de fer et on lave les pigments d'oxyde de fer et on les remet en dispersion dans de l'eau avant la précipitation du composé d'aluminium.

3. Procédé pour la préparation de pigments jaunes, hautement transparents d'oxyde de fer selon la revendication 1, caractérisé en ce que l'on utilise comme composé soluble d'aluminium du sulfate d'aluminium et/ou de l'aluminate de sodium.

4. Procédé pour la préparation de pigments jaunes, hautement transparents d'oxyde de fer de la modification α-FeOOH selon la revendication 1, caractérisé en ce que l'on utilise comme agent de précipitation de la soude caustique, de l'acide sulfurique, de l'aluminate de sodium.
